# EUROPEAN PATENT SPECIFICATION

(11) **EP 2 543 430 B1**
(45) Date of publication and mention of the grant of the patent: **12.03.2014**
(21) Application number: 12173137.6
(22) Date of filing: 22.06.2012
(51) Int. Cl.: B01F 7/00, B01F 7/18, B01F 13/00, A61C 9/00, B05C 17/005, A61C 5/06

(54) **Mixing tip for automatically mixing dental impression material**
Mischspitze zum automatischen Mischen von Zahnabdruckmaterial
Embout de mélange pour mélanger automatiquement un matériau d'empreinte dentaire

(30) Priority: 04.07.2011 KR 20110065917
(43) Date of publication of application: 09.01.2013
(73) Proprietor: Seil Dentech Co., Ltd., Busan (KR)
(72) Inventor: An, Sung bin, Busan (KR)
(74) Representative: Staudt, Hans-Peter

(56) References cited:
- EP-A1- 2 190 563
- DE-A1- 10 043 489
- DE-C1- 10 164 385
- US-A1- 2009 067 284
- US-A1- 2009 296 516

## Description

### BACKGROUND OF THE INVENTION

### Field of the Invention

The present invention generally relates to a mixing tip for automatically mixing dental impression material, and, in particular, to a mixing tip that includes a lower coupling unit formed to protrude from a lower end of a cover installed on top of a housing so that any impression material barely remains in the disposable mixing tip after the mixing tip has been used. The mixing tip further includes a primary mixing unit which includes a v-shaped groove formed in a circumferential surface of a body, vertical vanes provided between upper and lower wheels, and a plurality of upper and lower vertical grooves formed in the circumferential surfaces of the upper and lower wheels in a misaligned manner, so that a curing agent and a base paste can be evenly mixed.

### Description of the Related Art

Conventionally, the inventions of Korean Patent Laid-open Publication No. 2007-58633 (entitled "MIXER FOR MULTI-COMPONENT PASTES, KIT, AND METHOD OF MIXING PASTE COMPONENTS") and Korean Patent Laid-open Publication No. 2007-21207 (entitled "COMBINATION OF DYNAMIC MIXER AND CONTAINERS") have been published. Other related dental impression material mixing tips are disclosed in US 2009/0067284, EP-B-2190563 and DE 101 64 385 C1.

The related arts do not include the configuration of a primary mixing unit which is an important part in the present invention, the configuration of a lower coupling unit formed to protrude from a lower end of a cover, nor the configuration of a base paste containing unit formed in an upper portion of a hopper of a housing which allows a silicon base paste, (hereinafter referred to as a "base paste") a larger amount of which is extruded than a curing agent, to be temporarily stored therein and then to flow into a screw operating unit.

Therefore, the function of primarily mixing a curing agent and a base paste with a primary mixing unit of the present invention and the effect thereof cannot be anticipated from the related art. Moreover, the function of saving an amount of the impression material corresponding to the volume of a lower coupling unit protruding from a lower end of a cover is not anticipated. Additionally, a curing agent and a base paste are unevenly mixed because the related art lacks the function of enabling a base paste, a large amount of which is extruded, to be contained at first in a base paste containing unit and then to flow into the housing.

### SUMMARY OF THE INVENTION

Accordingly, the present invention has been made keeping in mind the above problems occurring in the related art, and is intended to enable a curing agent and a base paste to be evenly mixed, prevent impression material from being wasted, and to improve a mixing effect. That is, the present invention provides a base paste containing unit so that a base paste, which has been extruded in a larger amount than a curing agent, is temporarily stored in an upper portion of a hopper of a housing and then flows into a screw operating unit. This configuration allows the curing agent and the base paste to be evenly mixed. The present invention further provides a lower coupling unit protruding from a lower end portion of a cover to minimize the amount of the impression material that remains in a space between the lower surface of the cover and the hopper. This configuration prevents the impression material from being wasted. The present invention still further provides a primary mixing unit that can primarily and finely mix the curing agent and the base paste flowing from the hopper into a screw operating space. This configuration improves the effect that the base paste and the curing agent are finely mixed. The present invention yet further provides screw vanes which push the mixture stuck on the inner surface of the housing into a central portion of the housing so that the mixture is secondarily mixed. This configuration also improves the mixing effect.

In order to accomplish the object of the invention, there is provided a mixing tip for automatically mixing dental impression material including a housing, a screw that is rotatably inserted into the housing, and a cover that is provided on the housing. The housing has a cylindrical body with a screw operating space formed therein. A hopper and a discharge port are respectively connected to upper and lower portions of the main body in an integrated manner. A partition having the same internal diameter as the main body and having the same height as an upper end of a sloped portion of the hopper is formed in a central portion of the hopper. A curing agent introducing portion and a base paste introducing portion are formed in the partition to be separated apart from each other and to communicate with the screw operating space. A base paste containing unit is formed along the outer circumferential surface of the partition so that one end thereof communicates with the screw operating space via the base paste introducing portion. The screw includes a driving shaft unit, a primary mixing unit, and a screw unit connected in that order. The driving shaft unit passes through a shaft penetration hole of the cover and has a drive shaft insertion hole in which a driving shaft of an impression material mixing apparatus is inserted. The primary mixing unit includes V-shaped grooves which each extend over the entire length of the primary mixing unit and which are arranged on the circumferential surface at intervals. The primary mixing unit further includes vertical vanes vertically connected between upper and lower wheels, and a plurality of vertical grooves formed to extend vertically in the circumferential surface of the upper and lower wheels. The screw unit includes a screw shaft connected to a lower center portion of the lower wheel, and a plurality of screw vanes arranged on the circumferential surface of the screw shaft at intervals. The cover includes a disc-shaped body, the shaft penetration hole formed at the center of the disc-shaped body, and a curing agent introducing portion and a base paste introducing portion provided at both sides of the shaft penetration hole in order to allow introduction of a curing agent and a base paste, respectively. A lower coupling unit is formed to protrude from a lower end of the cover so as to be inserted into an upper portion of the hopper.

### BRIEF DESCRIPTION OF THE DRAWINGS

The above and other objects, features and further advantages of the present invention will be more clearly understood from the following detailed description when taken in conjunction with the accompanying drawings, in which:
Fig. 1 is an exploded perspective view illustrating a mixing tip according to the present invention;
Fig. 2 is a cross-sectional view illustrating an internal structure of the mixing tip according to the present invention;
Fig. 3 is a plan view illustrating a housing according to the present invention;
Fig. 4 is a front view illustrating a screw according to the present invention;
Fig. 5 is a bottom perspective view of a cover according to the present invention; .
Figs. 6(A) and 6(B) are cross-sectional views taken along lines A-A and B-B as indicated in Fig. 2, respectively; and
Fig. 7 is a plan view illustrating a mixing tip according to the present invention.

### DETAILED DESCRIPTION OF THE INVENTION

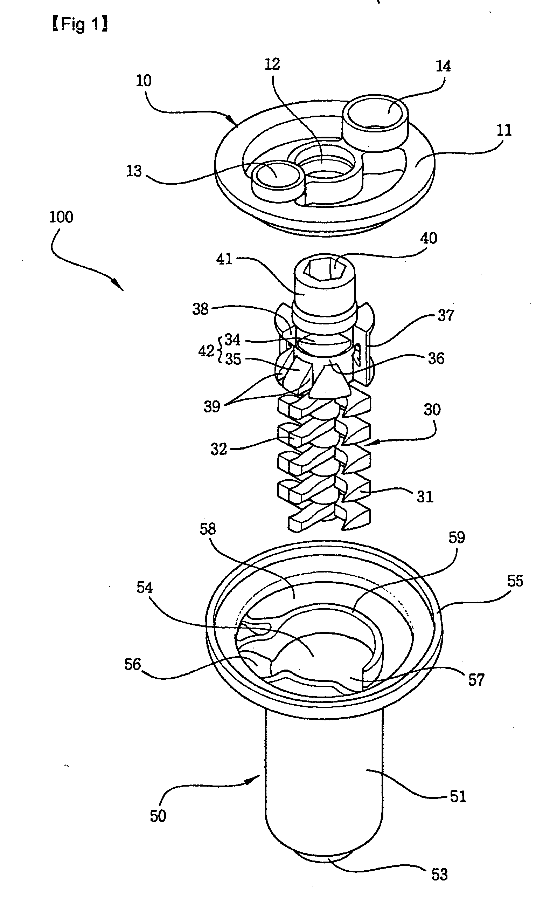

Hereinbelow, a mixing tip for automatically mixing dental impression material according to the present invention will be described with reference to Figs. 1 to 7.

As illustrated in Fig. 1, a mixing tip 100 according to the present invention includes a housing 50, a screw 30 rotatably inserted in the housing 50, and a cover 10 which is installed at an upper portion of the housing 50 while supporting a driving shaft 41 unit of the screw 30. The cover 10 is detachably connected to cartridges that respectively contain a base paste and a curing agent.

As illustrated in Figs. 1 to 3, the housing 50 includes a cylindrical tube-shaped main body 51 having a screw operating space 54 inside thereof, and a hopper 52 and a discharge port 53 respectively connected to upper and lower portions of the main body 51 in an integrated manner.

In this case, the hopper 52 is tapered from top to bottom and an upper portion thereof is provided with a two-step upper frame 55. The upper frame 55 surrounds the external circumference of the cover 10. In a central portion of the hopper 52, a partition 59 is formed such that it has the same internal diameter as the main body 51 and has the same height as the upper portion of the slope of the hopper 52.

The partition 59 is provided with a curing agent introducing portion 56 and a base paste introducing portion 57 that are separated apart from each other and can communicate with the screw operating space 54. A base paste containing unit 58 is formed along the outer circumferential surface of the partition 59, and has a size corresponding to a superior angle, in which one end of the base paste containing unit 58 communicates with the screw operating space 54 through the base paste introducing portion 57.

The expression that the base paste containing unit 58 has a size corresponding to a superior angle means that the base paste containing unit 58 is configured such that a base paste, which is extruded in a larger amount than a curing agent, flows into the base paste introducing portion 57 after filling the base paste containing unit 58. Although the applicant of the present invention proposes the base paste containing unit 58 which is formed along the outer circumference of the partition 59 and which has a size as wide as an angle of 210°, the base paste containing unit 58 may be formed along the outer circumference of the partition 59 and has a size as wide as an angle of about 180º.

In addition, as illustrated in Figs. 1, 2 and 4, the screw 30 includes a driving shaft unit 41, a primary mixing unit 42, and a screw unit arranged in that order from top to bottom. The driving shaft unit 41 passes through a shaft penetration hole 12 of the cover 10, and protrudes from the upper surface of the cover 10. The driving shaft unit 41 includes a driving shaft inserting hole 40, at a center portion thereof, in which a driving shaft of an impression material mixing apparatus (not illustrated) is inserted.

The primary mixing unit 42, which is integrally formed with a lower end portion of the driving shaft unit 41, has a v-shaped groove 36 which is formed to extend over its entire length in the circumferential surface. The primary mixing unit further includes vertical vanes 37 which are vertically installed between the upper and lower wheels 34 and 35 in a state in which the outer end portions of the vertical vanes 37 are aligned with the circumferences of upper and lower wheels 34 and 35. A plurality of upper and lower vertical grooves 38 and 39 are formed in the circumferential surfaces of the upper and lower wheels 34 and 35.

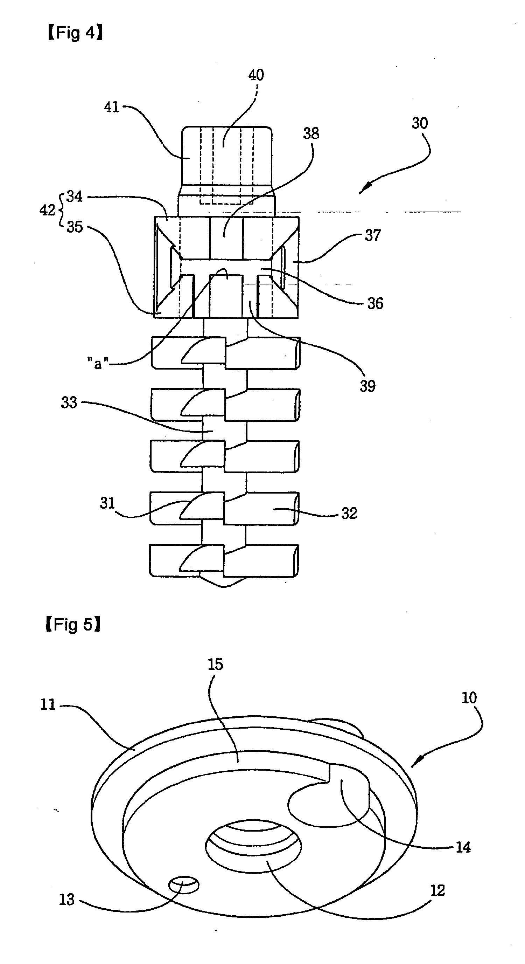

As illustrated in Fig. 4, the upper and lower vertical grooves 38 and 39 are formed at the front and the rear sides of the primary mixing unit 42. One upper vertical groove 38 is formed in the upper wheel 34, and the lower vertical grooves 39 are formed in the lower wheels 35 so as to be misaligned with the upper vertical groove 38, so that a base paste flowing through the upper vertical groove 38 is blocked by a front end (a) of the lower wheel 35 positioned between the lower vertical grooves 39 and its flow is stopped. The base paste and the curing agent are mixed primarily in the V-shaped groove 36 in the stopped state, and the mixture is then separated into two streams and flows through the two lower vertical grooves 39.

As illustrated in Figs. 1, 2, 4, and 6(A), the screw unit provided below the primary mixing unit 42 includes a plurality of screw vanes 32 arranged on the circumferential surface of a screw shaft 33 extending downward from the center of the lower wheel 35. Outer end portions of the screw vanes 32 are provided with arc-shaped scrapers 31 that scrape off the mixture stuck on the inner surface of the main body 51 in the direction in which the screw 30 rotates so that the mixture can move into the central portion of the main body 51. The outer circumferences (outer ends) of the screw vanes 32 and the primary mixing unit 42 are formed into a similar shape such that the screw vanes 32 and the primary mixing unit 42 rotate with a minute gap between them and the inner surface of the main body 51.

As illustrated in Figs. 1, 2, 5, and 7, the cover 10 has a disc-shaped body 11 and the shaft penetration hole 12 formed at the center of the disc-shaped main body 11 so that the driving shaft unit 41 of the screw passes through the shaft penetration hole 12. The disc-shaped body 11 has a curing agent inserting opening 13 and a base paste inserting opening 14 on the both sides of the shaft penetration hole 12 so that a curing agent and a base paste can flow into the curing agent introducing portion 56 and the base paste containing unit 58, respectively through the curving agent inserting opening 13 and the base paste inserting opening 14.

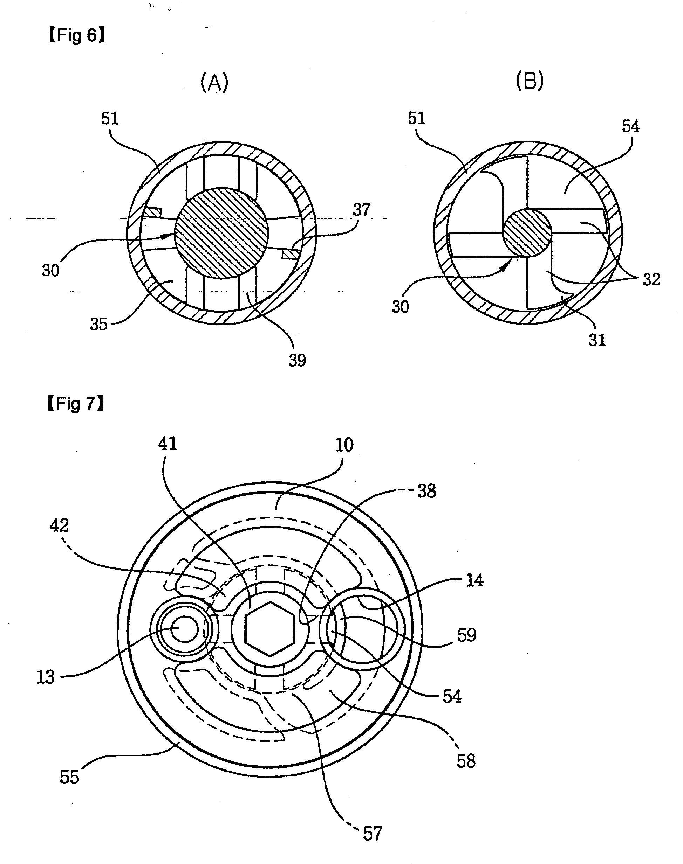

In this case, since the inner diameter of the base paste inserting opening 14 is larger than the width of the base paste containing unit 58, the inner part of the base paste inserting opening 14 is open to the partition 59 and the screw operating space 54 as illustrated in Fig. 7. Therefore, the base paste flows into the v-shaped groove 36 through the upper vertical groove 38 of the screw 30 that is rotatably inserted in the screw operating space 54.

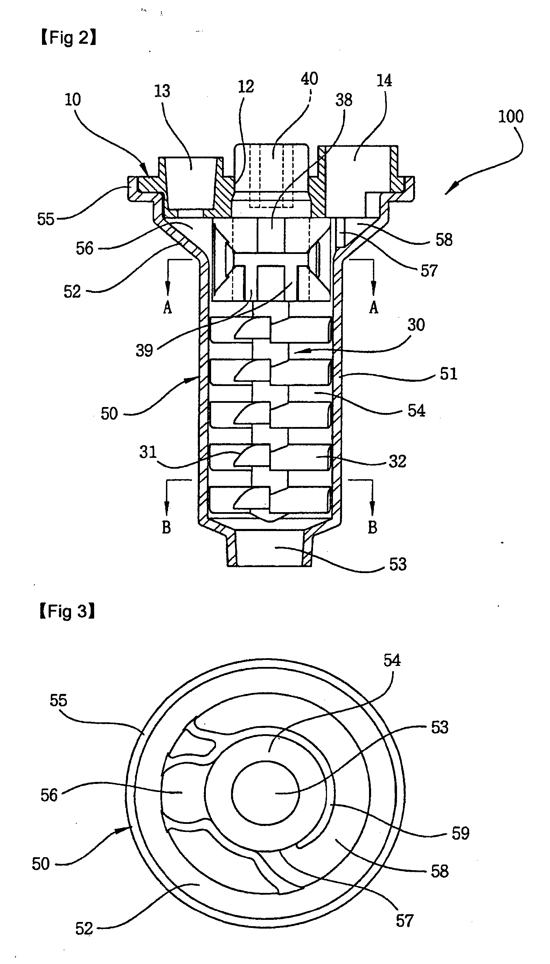

In addition, as illustrated in Figs. 2 and 5, a lower coupling unit 15 that is inserted in the upper portion of the hopper 52 is formed to protrude from the bottom surface of the main body 11. According to this configuration, since the lower coupling unit 15 is inserted in the hopper 52, the space containing the curing agent and the base paste is minimized, and thus a minimum amount of a mixture (of the impression material), in which the curing agent and the base paste are mixed, remain in the space after the mixing tip is used.

The operation related to the configuration described above will be described below with reference to Figs. 1 to 7.

As illustrated in Fig. 2, a mixing tip 100 according to the present invention includes the screw 30 inserted in the screw operating space 54 formed inside the main body 51 of the housing 50, the cover 10 mounted on the upper frame 55 of the housing 50, and the driving shaft unit 41 of the screw 30 formed to penetrate upwards through the shaft penetration hole 12 of the cover 10. In this state, the discharge ports of cartridges (not illustrated) mounted on an impression material mixing apparatus are connected to the curing agent inserting opening 13 and the base paste inserting opening 14 in an inserted manner, and a driving shaft (not illustrated) installed in the impression material mixing apparatus is inserted in the driving shaft inserting hole 40 formed in the driving shaft unit 41.

In this case, for the cartridges used in the mixing tip 100 according to the present invention, a base paste cartridge containing a base paste is larger than a curing agent cartridge containing a curing agent, and the discharge port of the base paste cartridge is larger so that a larger amount of the base paste is extruded than the curing agent.

When the impression material mixing apparatus is driven to extrude an impression material in such a state, piston units inserted in respective cartridges are pushed so that the curing agent and the base paste are extruded from the respective cartridges, and the screw 30 is rotated by a driving shaft driven by a motor.

As illustrated in Figs. 2 and 3, the curing agent extruded from the curing agent cartridge as described above flows into the curing agent introducing portion 56 positioned in the hopper 52 of the housing 50 through the curing agent inserting opening 13, and the base paste flows into the base paste containing unit 58 in the hopper 52 and the screw operating space 54 in the partition 59 through the base paste inserting opening 14.

In this case, as described above, since the amount of the base paste extruded from the base paste cartridge is larger than the amount of the curing agent extruded from the curing agent cartridge, the base paste containing unit 58 formed along the circumference of the partition 59 in an arc shape is primarily filled with a large amount of the base paste. In this state, the primary mixing unit 42 rotates in the main body 51 of the housing 50 as illustrated in Fig. 7. When rotating, when the upper vertical groove 38 becomes aligned with the base paste inserting opening 14, a small amount of the base paste flows through the gap formed by the alignment into the v-shaped groove 36 of the primary mixing unit 42 rotating in the screw operating space 54.

The curing agent flowing into the curing agent introducing portion 56 as described above flows into the v-shaped groove 36 of the primary mixing unit 42 located at the same height as the curing agent introducing portion 56 by the extrusion pressure as illustrated in Figs. 2 and 4.

Subsequently, the base paste that has flowed into the base paste containing unit 58 flows into the screw operating space 54 under the extrusion pressure of the base paste through the base paste introducing portion 57 that communicates with the screw operating space 54 at one end of the base paste containing unit 58 as illustrated in Figs. 5 and 7. In this case, the base paste introducing portion 57 is formed at the same height as the v-shaped groove 36 so that the base paste can flow into the v-shaped groove 36, and a small amount of the base paste that flows into the upper vertical groove 38 of the upper wheel 34 that is aligned with the base paste inserting opening 14 can flow into in the v-shaped groove 36.

In this manner, since the screw 30 rotates when the curing agent and the base paste are in the state of flowing into the v-shaped groove 36, the vertical vanes 37 vertically formed in a bar shape in the primary mixing unit 42 rotate the curing agent and the base paste, so that the base paste and the curing agent that have already entered the v-shaped groove 36 can rotate at the same level.

In this case, when the primary mixing unit 42 has moved such that a portion thereof, in which the curing agent is contained, has moved from the left side to the right side in the drawing, that is, to the base paste introducing portion 57, the curing agent that has already been present therein meets the base paste that has newly flowed in. On the opposite side, the base paste that has been present already meets the curing agent that has newly flowed in the same manner.

While the curing agent and the base paste come in contact in this way, the curing agent and the base paste flow down into the primary mixing unit 42 through the vertical grooves 39 formed in the lower wheel under the pressure caused by the inflow of the curing agent and the base paste. In this way, the curing agent and the base paste are primarily mixed in the V-shaped groove 36 of the primary mixing unit 42.

When the curing agent and the base paste flow into the primary mixing unit 42 through the lower vertical grooves 39 while being primarily mixed in the V-shaped groove, they mix in the following manner. That is, as illustrated in Fig. 4, the upper and lower vertical grooves 38 and 39 formed at the front and the rear sides of the primary mixing unit 42 are arranged such that one upper vertical groove 38 is vertically formed in the upper wheel 34 and the lower vertical grooves 39 are formed in the lower wheel 35 to be located under the upper vertical groove 38 and misaligned with the vertical groove 38. Accordingly, the base paste flowing through the upper vertical groove 38 is blocked by a front end (a) of the lower wheel 35 positioned between the lower vertical grooves 39. Therefore, the base paste does not directly flow down into the vertical grooves 39 but is mixed with the mixture that has been previously mixed in the V-shaped groove 36.

While the base paste is held back because it is blocked by the front end (a) of the lower wheel 35, the newly introduced mixture mixes with the old mixture which stays in the V-shaped groove 36, is then separated into two streams, and flows down through the two vertical grooves 39.

This mixture flowing down into the screw unit located under the primary mixing unit 42 is secondarily mixed in the screw operating space 54 by the screw vanes 32 which are arranged at intervals in multiple stages. The screw vanes 32 in multiple stages rotate on the same level in a horizontal direction to stir the mixture. The mixture stirred in the same level is pushed down by the downward pressure of the primary mixture flowing down from the vertical grooves 39, so that the stirred mixture spirally rotates down while being mixed further.

Since the arc-shaped scraper 31 oriented in a rotating direction of the screw 30 is formed at the outer end portion of the screw vane 32 as illustrated in Fig. 6, when the mixture is mixed by the screw unit, the arc-shaped scraper 31 scrapes off the mixed material stuck on the inner surface of the main body 51 so that the mixed material fall into the center of the housing. Accordingly, the impression material mixture including the curing agent and the base paste can be sufficiently mixed.

The sufficiently mixed impression material mixture is discharged through the discharge port 53 at the bottom of the main body 51 so that it can be molded by a dental frame as desired by a dentist. The used mixing tip 100 is disposed.

The impression material remains in the mixing tip 100 after being used. As illustrated in Figs. 2 to 5, the mixing tip 100 according to the present invention includes the lower coupling unit 15 protruding from the bottom of the cover 10 so as to be inserted into the hopper 52 of the housing 50, so that the amount of the impression material remaining in the disposable mixing tip 100 after use can be decreased by the amount corresponding to the volume of the lower coupling unit 15 protruding from the bottom of the cover. This prevents the impression material from being wasted.

In addition, according to the prevent invention, the primary mixing unit 42 formed by the screw 30 includes the v-shaped groove 36 formed in the circumferential surface, the vertical vanes 37 formed between the upper and lower wheels 34 and 35, the plurality of the upper and lower vertical grooves 38 and 39 formed in the upper and lower wheels 34 and 35 in a misaligned manner, so that a curing agent and a base paste can be evenly mixed.

In addition, the base paste that is extruded in a larger amount than a curing agent in the initial stage is contained in the base paste containing unit 58 formed in the upper portion of the hopper 52 of the housing 50, and, after the base paste containing unit 58 has been filled with the base paste, the base paste flows into the screw operating space 54 due to the continuous application of extrusion pressure so that the base paste, and the curing agent, which flows in a small amount compared to the base paste, are evenly mixed in the mixing tip 100.

In this case, even while the base paste containing unit 58 is being filled with the base paste, the base paste flows into the screw operating space 54 that vertically communicates with the base paste inserting opening 14 when the base paste inserting opening 14 is aligned with the upper vertical groove 38 as illustrated in Fig. 7. The curing agent is mixed with the base paste that flows into the upper vertical groove 38 even when the base paste containing unit 58 is being filled with the base paste. Therefore, the base paste and the curing agent can be mixed in the initial stage.

The mixing tip for automatically mixing dental impression material according to the present invention as described above has the effect of evenly mixing a curing agent and a base paste in the mixing tip by having the base paste containing unit that enables the base paste that is extruded initially in a larger amount than a curing agent to be initially stored in an upper portion of the hopper of the housing and then to flow into a screw operating space. The mixing tip of the present invention has another effect of preventing the impression material from being wasted by including the lower coupling unit which is formed to protrude from the bottom of the cover and thus minimize the amount of the impression material that remains in a space between the lower surface of the cover and the hopper.

In addition, the effect of mixing the curing agent and the base paste can be improved by including the primary mixing unit which primarily and finely mixes the curing agent and the base paste flowing from the hopper into the screw operating space and also by including screw vanes under the primary mixing unit which pushes the mixture stuck on the inner surface of the housing into the central portion so that the mixture can be secondarily mixed.

## Claims

1. A mixing tip for automatically mixing dental impression material comprising:
a housing (50);
a screw (30) that is rotatably inserted in the housing (50); and
a cover (10) that is provided on the housing (50), supports a driving shaft unit (41) of the screw (30), and is detachably connected to cartridges containing both a base paste and a curing agent, the mixing tip being **characterized in that**,
the housing (50) includes: a screw operating space (54) formed in a cylindrical main body (51); a hopper (52) and a discharge port (53) respectively connected to upper and lower portions of the main body (51) in an integrated manner; a partition (59) provided at a center portion of the hopper (52), the partition (59) having the same diameter as a diameter of the main body (51) and the same height as a height of an upper portion of a slope of the hopper (52); a curing agent introducing portion (56) and a base paste introducing portion (57) that are separated apart from each other and communicate with the screw operating space (54) in the partition (59); and a base paste containing unit (58) formed along an outer circumferential surface of the partition (59) so that one end thereof communicates with the screw operating space (54) through the base paste introducing portion (57),
the screw (30) includes the driving shaft unit (41), a primary mixing unit (42), and a screw unit that are connected **in that** order from top to bottom, wherein the driving shaft unit (41) passes through a shaft penetration hole (12) in the cover (10) and includes a driving shaft insertion hole (40), at a center portion, through which a driving shaft of an impression material mixing apparatus is inserted, and wherein the primary mixing unit (42) includes a v-shaped groove (36) that extends over an entire length of an outer circumferential surface of the primary mixing unit (42), vertical vanes (37) are vertically disposed between upper and lower wheels (34 and 35) so that outer end portions of the vertical vanes (37) reach outer circumferences of upper and lower wheels (34 and 35), and a plurality of upper and lower vertical grooves (38 and 39) are vertically arranged along the circumferences of the upper and lower wheels (34 and 35), and wherein the screw unit includes a plurality of screw vanes (32) on an outer circumference of a screw shaft (33) extending down from a center of the lower wheel (35), the screw vanes (32) being arranged at intervals, and
the cover (10) includes the shaft penetration hole (12) through which the driving shaft unit (41) passes upwards and which is formed in a center of a disc-shaped main body (11), a curing agent inserting opening (13) and a base paste inserting opening (14) through which the curing agent and the base paste flow in respectively and which are formed on both sides of the shaft penetration hole (12), and a lower coupling unit (15) that protrudes from a lower end of the main body (11) so as to be inserted into an upper portion of the hopper (52).

2. The mixing tip for automatically mixing dental impression material according to claim 1, **characterized in that**
the upper and lower vertical grooves (38, 39) are formed at front and rear portions of the primary mixing unit (42) such that one upper vertical groove (38) is vertically formed in the upper wheel (34) and the lower vertical grooves (39) are formed in the lower wheel (35) such that it is disposed below the upper vertical groove (38) and misaligned with the upper vertical groove (38), and
an arc-shaped scraper (31) is formed at an outer end portion of the screw vanes (32), the arc-shaped scraper (31) scraping off a mixture of dental impression material stuck on the inner surface of the main body (51) in a rotating direction of the screw (30) so that the mixture gathers at a center portion of the main body (51).

## Patentansprüche

1. Mischspitze zum automatischen Mischen von Dentalabdruckmaterial, aufweisend:
ein Gehäuse (50);
eine Schnecke (30), die drehbar in das Gehäuse (50) eingefügt ist; und
eine Abdeckung (10), die auf dem Gehäuse (50) vorgesehen ist, die eine Antriebswelleneinheit (41) der Schnecke (30) lagert und abnehmbar verbunden ist mit Kartuschen, welche eine Basispaste und ein Härtemittel enthalten, wobei die Mischspitze **dadurch gekennzeichnet ist, dass**
das Gehäuse (50) aufweist: einen Schneckenarbeitsraum (54),
der in einem zylindrischen Hauptkörper (51) ausgebildet ist; einen Trichter (52) und eine Ausgabeöffnung (53), die mit den oberen beziehungsweise unteren Teilen des Hauptkörpers (51) in integraler Weise verbunden sind; eine Abtrennung (59), die in einem mittleren Bereich des Trichters (52) vorgesehen ist, wobei die Abtrennung (59) den gleichen Durchmesser aufweist wie ein Durchmesser des Hauptkörpers (51) und die gleiche Höhe aufweist wie eine Höhe des oberen Teils einer Neigung des Trichters (52);
einen Härtemittel-Einführbereich (56) und einen Basispaste-Einführbereich (57), die voneinander getrennt sind und mit dem Schneckenbetriebsraum (54) in der Abtrennung (59) kommunizieren; und eine Basispaste-Enthaltende-Einheit (58), die längs einer äußeren Umfangsfläche der Abtrennung (59) so ausgebildet ist, dass ein Ende hiervon mit dem Schneckenarbeitsraum (54) kommuniziert durch den Basispaste-Einführbereich (57),
die Schnecke (30) aufweist: die Antriebswelleneinheit (41),
eine Primärmischeinheit (42) und eine Schneckeneinheit, die in dieser Reihenfolge von oben nach unten verbunden sind,
wobei die Antriebswelleneinheit (41) durch eine Wellendurchtrittsbohrung (12) in der Abdeckung (10) verläuft und eine Antriebswellen-Einfügebohrung (40) in einem mittleren Bereich aufweist, durch den eine Antriebswelle einer Abdruckmaterial-Mischvorrichtung eingeführt ist, und wobei die Primärmischeinheit (42) aufweist eine V-förmige Nut (36), die über eine gesamte Länge einer äußeren Umfangsfläche der Primärmischeinheit (42) verläuft, wobei vertikale Schaufeln (37) zwischen oberen und unteren Rädern (34 und 35) vertikal angeordnet sind, so dass äußere Endbereiche der vertikalen Schaufeln (37) die äußeren Umfänge der oberen und unteren Räder (34 und 35) erreichen, und wobei eine Mehrzahl von oberen und
unteren vertikalen Nuten (38 und 39) vertikal angeordnet sind längs des Umfangs der oberen und unteren Räder (34 und 35), und wobei die Schneckeneinheit eine Mehrzahl von Schneckenschaufeln (32) an einem äußeren Umfang einer Schneckenwelle (33) aufweist, die sich nach unten erstrecken von einer Mitte des unteren Rades (35), wobei die Schneckenschaufeln (32) in Intervallen angeordnet sind,
und
die Abdeckung (10) aufweist: die Wellendurchtrittsbohrung (12), durch welche die Antriebswelleneinheit (41) nach oben verläuft und die ausgebildet ist in einer Mitte eines scheibenförmigen Hauptkörpers (11), eine Härtemittel-Einführöffnung (13) und eine Basispaste-Einführöffnung (14), durch die das Härtemittel beziehungsweise die Basispaste fließen und die ausgebildet sind auf beiden Seiten der Wellendurchtrittsbohrung (12),
sowie eine untere Kopplungseinheit (15), die von einem unteren Ende des Hauptkörpers (11) so vorsteht, dass sie in einen oberen Abschnitt des Trichters (52) eingeführt wird.

2. Mischspitze zum automatischen Mischen von Dentalabdruckmaterial nach Anspruch 1, **dadurch gekennzeichnet, dass**
die oberen und unteren vertikalen Nuten (38, 39) an vorderen und hinteren Abschnitten der Primärmischeinheit (42) so ausgebildet sind, dass eine obere vertikale Nut (38) vertikal ausgebildet ist in dem oberen Rad (34) und die unteren vertikalen Nuten (39) ausgebildet sind in dem unteren Rad (35), so dass es unterhalb der oberen vertikalen Nut (38) angeordnet ist und gegenüber der oberen vertikalen Nut (38) versetzt ist, und
ein bogenförmiger Kratzer (31) an einem äußeren Endabschnitt der Schneckenschaufel (32) ausgebildet ist, wobei der bogenförmige Kratzer (31) eine Mischung des Dentalabdruckmaterials abkratzt, das auf der inneren Oberfläche des Hauptkörpers (51) haftet, in einer Drehrichtung der Schnecke (30), so dass die Mischung sich in einem mittleren Bereich des Hauptkörpers (51) sammelt.

## Revendications

1. Embout de mélange pour mélanger automatiquement un matériau d'empreinte dentaire comprenant:
un boîtier (50);
une vis (30) qui est insérée de manière rotative dans le boîtier (50); et
un couvercle (10) qui est fourni sur le boîtier (50), supporte une unité d'arbre d' entraînement (41) de la vis (30), et est raccordé de manière amovible à des cartouches contenant une pâte de base et un durcisseur, l'embout de mélange étant **caractérisé par le fait que**
le boîtier (50) contient: un espace d'actionnement de vis (54) formé dans un corps principal cylindrique (51); un entonnoir (52) et un port de décharge (53) raccordés respectivement à des portions supérieure et inférieure du corps principal (51) de manière intégrée; une cloison (59) fournie au niveau d'une portion centrale de l'entonnoir (52), la cloison (59) ayant le même diamètre qu'un diamètre du corps principal (51) et la même hauteur qu'une hauteur d'une portion supérieure d'une pente de l'entonnoir (52); une portion d'alimentation en durcisseur (56) et une portion d'alimentation en pâte de base (57) qui sont séparées l'une de l'autre et communiquent avec l'espace d'actionnement de vis (54) dans la cloison (59); et une unité contenant une pâte de base (58) formée le long d'une surface circonférentielle extérieure de la cloison (59) de telle sorte qu'une extrémité de celle-ci communique avec l'espace d'actionnement de vis (54) à travers la portion d'alimentation en pâte de base (57),
la vis (30) contient: l'unité d'arbre d'entraînement (41), une unité de mélange primaire (42), et une unité de vis qui sont raccordées dans cet ordre de haut en bas, dans laquelle l'unité d'arbre d'entraînement (41) passe à travers un trou de pénétration d'arbre (12) dans le couvercle (10) et contient un trou d'insertion d'arbre d'entraînement (40), au niveau d'une portion centrale, à travers lequel un arbre d'entraînement d'un appareil de mélange de matériau d'empreinte est inséré, et dans laquelle l'unité de mélange primaire (42) contient une gorge en forme de V (36) qui s'étend sur une longueur totale d'une surface circonférentielle extérieure de l'unité de mélange primaire (42), des aubes verticales (37) sont disposées verticalement entre des roues supérieure et inférieure (34 et 35) de telle sorte que des portions terminales extérieures des aubes verticales (37) atteignent des circonférences extérieures de roues supérieure et inférieure (34 et 35), et une pluralité de gorges verticales supérieures et inférieures (38 et 39) sont disposées verticalement le long des circonférences des roues supérieure et inférieure (34 et 35), et dans laquelle l'unité de vis contient une pluralité d'aubes à vis (32) sur une circonférence extérieure d'un arbre de vis (33) s'étendant vers le bas depuis un centre de la roue inférieure (35), les aubes à vis (32) étant disposées à des intervalles, et
le couvercle (10) contient: le trou de pénétration d'arbre (12) à travers lequel l'unité d'arbre d'entraînement (41) passe vers le haut et qui est formé dans un centre d'un corps principal en forme de disque (11), une ouverture d'insertion de durcisseur (13) et une ouverture d'insertion de pâte de base (14) à travers lesquelles le durcisseur et la pâte de base s'écoulent respectivement et qui sont formées sur les deux côtés du trou de pénétration d'arbre (12), et une unité de couplage inférieure (15) qui fait saillie hors d'une extrémité inférieure du corps principal (11) de manière à être insérée dans une portion supérieure de l'entonnoir (52).

2. Embout de mélange pour mélanger automatiquement un matériau d'empreinte dentaire selon la revendication 1, **caractérisé par le fait que**
les gorges verticales supérieures et inférieures (38, 39) sont formées sur des portions avant et arrière de l'unité de mélange primaire (42) de telle sorte qu'une gorge verticale supérieure (38) est formée verticalement dans la roue supérieure (34) et les gorges verticales inférieures (39) sont formées dans la roue inférieure (35) de telle sorte qu'elle est disposée sous la gorge verticale supérieure (38) et non alignée avec la gorge verticale supérieure (38), et
un grattoir en forme d'arc (31) est formé au niveau d'une partie terminale extérieure des aubes à vis (32), le grattoir en forme d'arc (31) grattant un mélange de matériau d'impression dentaire collé sur la surface intérieure du corps principal (51) dans une direction rotative de la vis (30) de telle sorte que le mélange se rassemble au niveau d'une portion centrale du corps principal (51).
